# EUROPEAN PATENT APPLICATION

(11) **EP 1 757 663 A2**
(43) Date of publication of application: **28.02.2007**
(21) Application number: 06017668.2
(22) Date of filing: 24.08.2006
(51) Int. Cl.: C09C 1/40

(54) **Functionalized alumina particles for polymer composites**

(30) Priority: 25.08.2005 US 711230; 08.08.2006 US 500332
(71) Applicant: Air Products and Chemicals, Inc., Allentown, PA 18195-1501 (US)
(72) Inventor: Quay, Jeffrey Raymond, Kutztown, PA 19530 (US)
(74) Representative: Kador & Partner

(57) **Abstract**

Functionalized alumina particles, methods for making them, and compositions containing them are provided. The particles include alumina particles that have been surface treated with at least one acid of the formula A-R-Q, wherein A is SO₃H, PO₃H₂, or PO₂H₂, R is an organic connecting group, and Q is a reactive moiety such as OH, NH₂, vinyl, acryloxy, methacryloxy, NCO, CO₂H, SH, or epoxy. The particles may be incorporated into polymer matrices to form composite materials having superior mechanical performance properties.

## Description

This Application claims the benefit of Provisional Application No. 60/711,230, filed on August 25, 2005. The disclosure of this Application is hereby incorporated by reference.

### BACKGROUND OF THE INVENTION

Reinforcement of polymers, especially elastomers or plastics, is an approach commonly used to extend the polymer's performance in terms of stiffness or modulus. A common method of reinforcement is the use of inorganic fillers. Unfortunately, the resulting improvements in stiffness and modulus are often accompanied by significant embrittlement of the polymer and significantly reduced percent elongation, flexibility, and resistance to tear. Thus polymer composites having a suitable combination of these and other performance properties are desired for introduction as commercial products.

### BRIEF SUMMARY OF THE INVENTION

In one aspect, the invention provides a composition comprising alumina particles wherein the particles are surface functionalized with at least one acid of the formula A-R-Q; wherein:

A comprises at least one acid group selected from the group consisting of SO₃H, PO₃H₂, and PO₂H₂;

R comprises at least one organic connecting group selected from the group consisting of substituted and unsubstituted acyclic, alicyclic, cyclic, and heterocyclic moieties; and

Q comprises at least one reactive moiety selected from the group consisting of OH, NH₂, vinyl, acryloxy, methacryloxy, NCO, CO₂H, SH, and epoxy. The inventive particles can be employed alone or in mixtures with other fillers and inorganic particles.

In yet another aspect, the invention provides methods of making a polyurethane composition and blended precursors for making the composition including polyurethane foams. The method includes mixing together in any suitable sequence at least one polymeric polyol; at least one isocyanate component selected from the group consisting of diisocyanates, triisocyanates, polyisocyanates, and combinations of these; and the inventive functionalized alumina particles. The particles are surface functionalized with at least one acid of the formula A-R-Q; wherein A-R-Q is as defined above.

In still another aspect, the invention provides a composite material including an elastomer and alumina particles wherein the particles are surface functionalized with at least one acid of the formula A-R-Q; wherein A-R-Q is as defined above. Examples of such composite materials comprise at least one member selected from the group consisting of elastomers (cast, injection molded, among others), adhesives, sealants, coatings, and microcellular elastomers including components for shoes including shoe soles.

In a further aspect of the invention, the inventive particles can be employed as a component of a precursor that is used for making the aforementioned compositions or composites.

### BRIEF DESCRIPTION OF SEVERAL VIEWS OF THE DRAWINGS

FIGS. 1-5 are Dynamic Mechanical Analysis (DMA) plots for polyurethane elastomers containing functionalized alumina particles according to the invention, along with plots for control elastomers.

FIGS. 6A and 6B are TEM photographs of the product formed in accordance with Example E1.

FIG 7 is an SEM photograph of the product formed in accordance with Example C4.

### DETAILED DESCRIPTION OF THE INVENTION

The invention provides methods and compositions for reinforcing polymers while causing little or no embrittlement of the resulting composite material. A common problem with prior art, non-functionalized particles such as clays and metal oxide/hydroxide particles (for example non-functionalized silicas and aluminas) is their tendency to aggregate during efforts to incorporate them into polymer systems, even with the aid of high shear mixing equipment. The result associated with prior art particles is poor dispersion of the particles and/or relatively poor association between the particles and the polymer matrix or system thereby causing composite embrittlement and other performance problems.

The inventors have found that alumina particles that have been surface functionalized to enable interaction or reaction of the particles with the polymer matrix are able to provide a significant increase in composite performance despite their relatively low aspect ratios of typically less than about 5:1 (e.g., this contrasts with the relatively high aspect ratios observed for conventional exfoliated clays, which typically have an aspect ratio of 50 or more). At least partly due to the relatively low aspect ratios, functionalized alumina particles are typically easier than clays to disperse into solvents or polymer precursors using conventional shear mixing equipment. The rheology of the resulting dispersions is also typically more satisfactory than that obtained when clays or other high aspect ratio particles are used, thus allowing easy handling and mold filling.

The inventive particles can be used for improving the stiffness (Young's Modulus), Dynamic Storage Modulus (DMA) and hardness of composites incorporating the particles without adversely affecting flexibility, ductility, among other desired properties. While the affect is dependent upon the amount of inventive particles, the amount of the inventive particles is normally sufficient to increase at least one of the foregoing properties (e.g., a two hundred percent (200%) improvement in Young's Modulus and DMA in comparison to an article without the inventive particles).

### Base particles

Base particles suitable for conversion to the functionalized particles of this invention comprise alumina. As used herein, the term "alumina" means a hydrated aluminum oxide. The hydrated aluminum oxide may be naturally occurring or synthetic. Suitable exemplary aluminas comprise at least one of gibbsite (Al₂O₃·3H₂O, also known as hydrargillite or alumina trihydrate) and boehmite (Al₂O₃·H₂O, also known as alumina monohydrate). Gibbsite is present as the gamma form of aluminum hydroxide, γ-Al(OH)₃, and boehmite is the gamma form of an aluminum oxide hydroxide, γ-AIOOH. Also suitable is diaspore, the alpha form of aluminum oxide hydroxide, α-AIOOH, as well as two other alumina trihydrate forms: nordstrandite and bayerite. Pseudoboehmite, a hydrated alumina according to the general formula Al₂O₃·xH₂O (2.0 > x > 1.0), may also be used, as may mixtures of aluminas.

In order to obtain optimum composite properties, the alumina particles typically have an average size of less than about 1000nm, more typically less than about 200nm, and most typically less than about 100nm. This relatively small size provides a very large surface area available for interaction of the particles with the polymer. Functionalization of the alumina base particles may be performed by the methods described in U.S. Patent Nos. 6,224,846 and 6,846,435B1, the entire disclosure of which is expressly incorporated herein by reference.

Suitable alumina particles may be those such as described in U.S. Patent Nos. 6,846,435B1. These alumina particles may have a crystallite size of about 4 to about 100nm, and usually the crystallite size will be about 6 to about 20nm (determined by x-ray diffraction on the 021 reflex). The particle size is generally less than about 1,000nm, more commonly about 5 to 500nm, and most typically about 20 to 100nm.

### Functionalizing Acids

Given the high contact area between the particles and the polymer matrix, it is desirable that the particles be strongly associated with the polymer so as not to merely be present in the composite, but rather to be structurally incorporated therein. In order to achieve this, the surface of the particles is treated with at least one of sulfonic, phosphonic, and/or phosphinic acid that bears a functional group capable of interacting or reacting with the polymer matrix. The acid group bonds firmly (e.g., ionically) to the base particle, thus tying the particle to the matrix. Modification of the surface with more than one functionalizing acid may be desirable, to optimize the interaction of the particles with the matrix. Suitable functionalizing acids are of the formula A-R-Q; wherein A comprises at least one member selected from the group consisting of SO₃H, PO₃H₂, or PO₂H₂; R comprises an organic connecting group; and Q comprises a reactive moiety.

Suitable Q groups may comprise at least one of NCO, CO₂H, epoxy, amine, and hydroxyl moieties, for example when the particles are to be used in polyurethane formulations. Other suitable Q groups may comprise at least one of SH, vinyl, or acrylic moieties (such as acryloxy, methacryloxy); these may for example be especially suitable for reacting with unsaturated compounds such as at least one of vinyl, acrylic, alkyd, neoprene, SBR, or UV curable polymer systems.

Suitable R groups comprise, as nonlimiting examples, substituted and unsubstituted acyclic, alicyclic, cyclic, and heterocyclic moieties. In some embodiments, R comprises at least one C2-C25 moiety selected from the group consisting of substituted and unsubstituted alkyl, aryl, aralkyl, alkaryl, and alkenyl. As used herein, the term "substituted" when used in this context means that R contains one or more heteroatoms. Exemplary nonlimiting heteroatoms comprise at least one of oxygen, sulfur, and nitrogen. Exemplary nonlimiting substituents comprise at least one of OH, NH₂, vinyl, acryloxy, methacryloxy, NCO, CO₂H, SH, and epoxy. It is to be understood that these groups, if present, are in addition to the group Q. Thus, in one nonlimiting example, the Q group may be NH₂ and there may be one or more additional NH₂ groups (or hydroxyls, or others) on the R group. In some embodiments, R comprises at least one member selected from the group consisting of C2-C8 alkyl, phenyl, benzyl, and phenethyl. Suitable specific examples of functionalizing acids comprise at least one member selected from the group of isethionic acid, taurine, sulfanilic acid, vinylsulfonic acid, styrenesulfonic acid, phenolsulfonic acid, 3-hydroxypropane-1-sulfonic acid, 4-aminotoluene-3-sulfonic acid, 3-amino-4-hydroxybenzenesulfonic acid, 1-amino-2-ehoxynahthalene-6-sulfonic acid, 2,3-dihydroxynaphthalene-6-sulfonic acid, and 2-hydroxy-4-methoxybenzopheneon-5-sulfonic acid.

Methods for treating base particles with functionalizing sulfonic acids may follow the general techniques described in U.S. Patent No. 6,224,846 (hereby incorporated by reference) for reacting simple sulfonic acids with alumina. Similar methods are suitable for treating base particles with functionalizing phosphonic and phosphinic acids.

The functionalizing acids on the surface of alumina particles may or may not be in the form of the free acid. The acids may be in that form, or they may be in the form of a reaction product between the sulfonic, phosphonic or phosphinic acid group and the metal oxide/hydroxide (or other) groups on the surface of the alumina particle. Thus, when a particle is described herein as having a functionalizing acid on its surface, or to being "surface functionalized," it is to be understood that the acid may be in its free form or the acid may be in the form of a reaction product with the surface of the particle, or both. Similarly, the functionalized alumina particle will in many cases be incorporated into a composition by reacting the Q group (OH, NH₂, mixtures thereof, among others) with other components in the composition. Therefore, it will be understood that reference to compositions comprising surface functionalized alumina particles includes those in which the Q group is intact, those in which it has reacted with other components in the composition, or both.

### Polymer Matrix

Any of a number of polymer types may benefit from the inclusion of functionalized alumina particles according to the invention, and the invention contemplates the use of polymers of any kind such as polyurethanes, polyureas, polyurethaneureas, mixtures thereof, among others. In some embodiments, the polymer comprises an elastomer, for example at least one member selected from the group consisting of vinyl, acrylic, alkyd, UV curable, and diene-based elastomers. Nonlimiting examples of diene-based elastomers comprise at least one member selected from the group consisting of SBR, synthetic and natural latex rubbers, polyneoprene, polyisoprene, EPDM polymers, and acrylonitrile-butadiene-styrene polymers. Other elastomers will be well known to those skilled in the art, and are also contemplated for use according to the invention. The elastomers may be incorporated into adhesives, sealants, foams, coatings, and other forms, and may also take the form of microcellular elastomers; all of which have improved properties relative to elastomers without the inventive particles.

Some exemplary embodiments of the invention employ a polyurethane polymer matrix. As used herein, the term "polyurethane" encompasses polyurethanes themselves, polyureas, and polyurethane-ureas. Exemplary polyurethanes may be made from any of a wide variety of polyisocyanates known in the art. Examples of suitable polyisocyanates comprise at least one member selected from the group consisting of hexamethylene diisocyanate, phenylene diisocyanates, toluene diisocyanates, and 4,4'-diphenylmethane diisocyanate. Especially suitable are the 2,4-and 2,6-toluene diisocyanates individually or together as their commercially available mixtures. Other suitable mixtures of diisocyanates are those known commercially as "crude MDI", also known as PAPI, which contain about 60% of 4,4'-diphenylmethane diisocyanate along with other isomeric and analogous higher polyisocyanates and other modified "liquid MDI's" such as are known by that name in the polyurethane art. Also suitable are "prepolymers" of these polyisocyanates comprising a partially pre-reacted mixture of polyisocyanates and polymeric polyols such as polyether or polyester polyols.

Suitable polymeric or oligomeric polyols for use in making polyurethane composites of this invention comprise polyalkylene ether polyols and polyester polyols. Polyalkylene ether polyols include poly(alkylene oxide) polymers such as poly(ethylene oxide) and poly(propylene oxide) polymers and copolymers having terminal hydroxyl groups derived from low molecular weight polyhydric compounds comprising diols and triols, such as at least one member selected from the group consisting of ethylene glycol, propylene glycol, 1,3-butanediol, 1,4-butanediol, 1,6-hexanediol, neopentyl glycol, diethylene glycol, dipropylene glycol, pentaerythritol, glycerol, diglycerol, trimethylol propane, cyclohexanediol, mixtures thereof, among others. Useful polyester polyols comprise those produced by reacting a dicarboxylic acid with an excess of a diol, for example adipic acid with ethylene glycol, diethylene glycol or 1,4-butanediol, or reacting a lactone such as caprolactone with an excess of a diol such as propylene glycol. Additional suitable polymeric polyols comprise hydroxy-terminated polybutadienes and hydroxy-terminated silicones. Other polymeric polyols are known in the art, and their use is also contemplated according to the invention.

Formulations for making polyurethane/particle composites according to the invention may also include any of a variety of other ingredients comprising at least one member selected from the group consisting of blowing agents such as water, methylene chloride, trichlorofluoromethane, among others and mixtures thereof; cell stabilizers such as silicones, and organometallic catalysts such as dibutyltin dilaurate and tertiary amines.

### Incorporation of Functionalized Alumina Particles Into Polymer Matrices

The functionalized alumina particles may be provided in a number of forms, including dry powders, slurries, and dispersions. Typically the starting material will be a dry powder with an agglomerate particle size of about 0.1 to about 50µm. Under shear conditions, and aided by the surface functionalization of this invention, these agglomerates tend to break down to give a significant percentage of particles below about 1000nm (1µm) in size. Typically, at least about 50 volume%, more typically at least about 75 volume%, and most typically at least about 90 volume% of the particles will be below this size after dispersion into a composition. In many applications, the number is at least about 95 volume%. The particles may be incorporated into the polymer composition by any of a number of means, to obtain good dispersion. For example, the particles may be predispersed in a compatible solvent or surfactant solution and added to the polymer formulation. While any suitable solvent can be employed, examples of suitable solvents comprise at least one member selected from the group consisting of glycols, alcohols, ketones, acetone, toluene, xylene, methylethyl ketone, mixtures thereof, among others. The amount of solvent can vary depending upon the end use and solid content, and typically ranges from about 10 to about 30 wt.%. The solvent may optionally be removed by standard means. Instead, or in addition, the particles may be dispersed in a portion of the formulation used to make the polymer matrix, for example in a component comprising one or more prepolymers, polyols, monomers, resins, curing agents or other additives, or they may be dispersed into mixtures containing all of the reactive ingredients for making the polymer.

For example, the particles may be incorporated in a polyurethane precursor comprising one or more ingredients selected from the group consisting of polymeric polyols, di- or tri-isocyanates, reaction products of polymeric polyols with di- or tri-isocyanates, lower glycols, and non-glycol polyurethane curing agents such as amines. Lower glycols typically include mono-, di-, tri-, and tetraethylene (or propylene) glycols, as well as C2-C6 glycols such as ethylene glycol, propylene glycol, butanediols, pentanediols, and hexanediols. Thus, compositions according to the invention may be made by mixing together in any sequence a polymeric polyol, a di- or tri-isocyanate, and the functionalized alumina particles. They may also be made by mixing together a polymeric polyol, a polyisocyanate, and the functionalized alumina particles. In some cases, it may be desirable to disperse the particles in a lower glycol and/or a non-glycol polyurethane curing catalyst without the presence of polymeric polyols, di- or tri-isocyanates, or reaction products of polymeric polyols with di- or tri-isocyanates. Such mixtures may provide convenient handling of the functionalized particles, greater formulation latitude for the ultimate polyurethane composition, and other advantages.

Typically, the particles can be adequately dispersed using low or moderate shear processes such as blending. Sonication and other high energy processes may also be used to obtain optimal dispersion. In some cases, the particles may be compounded directly into the polymer itself. One nonlimiting example of the latter is compounding into a non-crosslinked rubber.

Optimum loading levels of the functionalized alumina particles in the polymer are dependent on a number of factors, including desired level of reinforcement, cost constraints, and system rheology. Typical use levels in many systems, for example polyurethanes, are less than about 10% by weight, more typically less than about 5% by weight. However, there may be circumstances where higher loadings are desired to optimize other performance characteristics, for example scratch resistance or flame retardancy, and all loading levels are contemplated by this invention. It should be further noted that other functionalized or unfunctionalized particles may also be included in any of the formulations of this invention, while still remaining within the scope thereof. Such other types of particles are well known to those of skill in the art, and include as nonlimiting examples silica, calcium carbonate, talc, clays, mixtures thereof, among others.

The invention is further illustrated by the following examples, which are presented for purposes of demonstrating, but not limiting, the methods and compositions of this invention.

### EXAMPLES

The following examples illustrate the preparation of prepolymers and other polyurethane ingredients containing functionalized alumina particles, the preparation of polyurethane/alumina composites from these ingredients, and the superior performance properties obtained by use of the methods and compositions of this invention.

### Functionalized Alumina Particles

Functionalized alumina (boehmite) particles were supplied by Sasol North America of Houston, TX. Similar particles may be made by the methods described in U.S. Pat. No. 6,224,846 or US 6,846,435, hereby incorporated by reference. The loading of functionalizing acid on the boehmite is specified as a mole % of the available surface AIOH groups, which is based on the surface area of the base boehmite particles. The base boehmite particles had a surface area of 300 m²/g, which corresponds to a surface AIOH equivalent weight of 430 g/eq., or a surface area of 250 m²/g, corresponding to a surface AIOH equivalent weight of 500 g/eq. The particles used in the Examples and Comparative Examples are described below in Table 1. The linear alkylbenzenesulfonic acid was BIO-SOFT S-101 available from Stepan Company of Northfield, IL.

**TABLE 1**

| Boehmite particle | Surface Area | Linear Alkyl-benzene-sulfonic acid (LAS) | Isethionic Acid | Para Toluene-sulfonic Acid | Taurine |
|---|---|---|---|---|---|
| | m²/g | mole % | mole % | mole % | mole % |
| N-1 | 300 | 50 | 10 | 0 | 0 |
| N-2 | 300 | 0 | 0 | 0 | 0 |
| N-3 | 250 | 0 | 0 | 52 | 13 |

### Polyurethane Prepolymers

In the following examples, notations regarding particle loadings reflect a particle content calculated to enable a 5% by weight loading of the particles in the final elastomer. Actual loading may differ slightly due to actual weights used and reactant variability.

### Example E1 (5% N-1 loading)

A 20% dispersion of N-1 in toluene was made by adding the dry particle powder to the toluene and shaking until a clear dispersion was obtained. A 311.8-g portion of the dispersion was added to a polyol blend consisting of 541.0 g POLYTHF 1000 (available from BASF) and 49.4 g diethylene glycol (DEG). The product was mixed until uniform. A 1387-g portion of 50% 2,4-toluene diisocyanate/50% 2,6-diisocyanate (TDI) was charged to a jacketed reactor equipped with a N₂ purge and mechanical agitator. The reactor was preheated to 40°C and the polyol blend was slowly fed into the reactor over 6 hours with agitation. The reactor temperature was maintained at 50±3°C. The mixture was held overnight at 50°C to complete the reaction. The excess unreacted TDI was removed by wiped-film evaporation using a Pope 2" molecular still operating at 130°C and 1 Torr with a feed rate of 5-10 g/min, to yield 844g of prepolymer.

### Example E2 (3% N-1 loading)

A 20% dispersion of N-1 in toluene was made by adding the dry particle powder to the toluene and shaking until a clear dispersion was obtained. A 186.0-g portion of the dispersion was added to a polyol blend consisting of 568.6 g POLYTHF 1000 (BASF) and 46.1 g diethylene glycol (DEG). The product was mixed until uniform. A 1393-g portion of 50% 2,4-toluene diisocyanate/50% 2,6-diisocyanate was charged to a jacketed reactor equipped with a N₂ purge and mechanical agitator. The reactor was preheated to 40°C and the polyol blend was slowly fed into the reactor over 6 hours with agitation. The reactor temperature was maintained at 50±3°C. The mixture was held overnight at 50°C to complete the reaction. The excess unreacted TDI was removed by wiped-film evaporation using a Pope 2" molecular still operating at 130°C and 1 Torr with a feed rate of 5-10 g/min.

### Comparative Example C1 (no particles)

A prepolymer not containing any boehmite filler was prepared as follows. A 100-part portion of 50% 2,4-toluene diisocyanate/50% 2,6-diisocyanate (TDI) was charged to a jacketed reactor equipped with a N₂ purge and a mechanical agitator. A polyol blend prepared from 43.8 parts of PolyTHF 1000 (OH# 112) and 3.0 parts of diethyleneglycol was fed into the reactor over 2-6 hours with agitation, during which the reactor temperature was controlled between 45-60°C. The excess unreacted TDI was removed by wiped-film evaporation using a Pfaudler wiped film evaporator operating at 160°C and <0.1mm Hg.

### Comparative Example C2

Unfunctionalized boehmite N-2 did not form a stable dispersion in toluene using moderate shear mixing (Cowles blade @ 1500 rpm) or ultrasonication. The N-2 particles also did not form a stable dispersion in the polyol blend or the TDI and therefore it was not possible to make a prepolymer with this material using the general procedure of Example 1.

### Comparative Example C3 (5% N-2 loading)

A 620-g portion of C1 prepolymer was charged to a 1 liter reactor equipped with a mechanical stirrer and an N₂ purge. The prepolymer was heated to 80°C and 41 g of N-2 was added with agitation. The contents were agitated for 1.5 hrs at 80°C to insure good mixing.

### Comparative Example C4 (5% N-1 loading)

A 700-g portion of C1 prepolymer was charged to a 1 liter reactor equipped with mechanical strirring and N₂ purge. The prepolymer was heated to 80°C and 47.5g of N-1 was added with agitation. The contents were agitated for 2.5 hrs at 80°C to insure good mixing.

### Example E3 (5% N-1 loading)

A 20% dispersion of N-1 in toluene was made by adding the dry particle powder to the toluene and shaking until a clear dispersion was obtained. A polyol blend was prepared consisting of 367.5 g POLYTHF 1000 (BASF) and 25.6 g diethylene glycol (DEG). A 93.92-g portion of the dispersion was added to 182.0 g of the polyol blend. The product was mixed until uniform. A 103.1-g portion of MONDUR TDS (toluene diisocyanate having a high 2,4 isomer content, available from Bayer) was charged to a jacketed reactor equipped with a N₂ purge and mechanical agitator. The polyol blend was slowly fed into the reactor over 30 minutes with agitation. The reactor temperature was maintained at 70±3°C. The mixture was held overnight at 70°C to complete the reaction, after which the toluene was removed by vacuum distillation.

### Example E4 (5% N-1 loading)

A 103.1-g portion of MONDUR TDS was charged to a jacketed reactor equipped with a N₂ purge and mechanical agitator. A 18.6-g portion of N-1 was added to the flask with vigorous stirring at room temperature. The mixture was then heated to 60°C and held for 1 hour. A 178.6-g portion of the polyol blend prepared in Example E3 was slowly fed into the reactor over 30 minutes with agitation. The reactor temperature was increased to 70°C and held overnight at 70±3°C to complete the reaction.

### Comparative Example C5 (no particles)

A 557.2-g portion of MONDUR TDS was charged to a jacketed reactor equipped with a N₂ purge and mechanical agitator. The TDS was then heated to 70°C. A 1042.8-g portion of a polyol blend consisting of 987.8 g POLYTHF 1000 (BASF) and 68.45 g diethylene glycol (DEG) was slowly fed into the reactor over 2.5 hours with agitation. The mixture was held overnight at 70±3°C to complete the reaction.

### Cast Elastomers

Cast elastomers were made from the prepolymers prepared in the foregoing paragraphs, using 4,4'-methylene bis-orthochloroaniline (MOCA) as the curing agent. The prepolymer was degassed and heated to 80°C. MOCA was melted on a hot plate and heated to 110-120°C. The MOCA was added to the prepolymer and mixed at 2500 rpm in a Flak Tek mixer. The mixture was poured into glass molds coated with a mold release agent and preheated to 100°C. Parts were cured in an oven at 100°C for 16 hours. The plaques were allowed to age at 75°F and 50% relative humidity for at least 2 weeks before testing. Physical testing was carried out according to ASTM methods D-412, D-470, D-1938, and D-2240.

Details of the formulations used for making the plaques are shown in Table 2, in which "Particle Content" refers to the modified particles.

**TABLE 2**

| Prepolymer and Casting Data | | | | |
|---|---|---|---|---|
| Example | %NCO | Prepolymer | MOCA | Particle Content |
| | | (grams) | (grams) | Wt% |
| E1 | 8.49 | 200 | 51.1 | 4.99 |
| E2 | 8.51 | 200 | 51.1 | 2.96 |
| C1 | 8.30 | 200 | 49.9 | 0 |
| C3 | 6.97 | 200 | 42.1 | 5.17 |
| C4 | 7.65 | 200 | 46.3 | 5.08 |
| E3 | 8.22 | 75 | 18.5 | 4.96 |
| E4 | 8.24 | 75 | 18.5 | 4.97 |
| C5 | 8.69 | 75 | 19.6 | 0 |

### Dynamic Mechanical Analysis

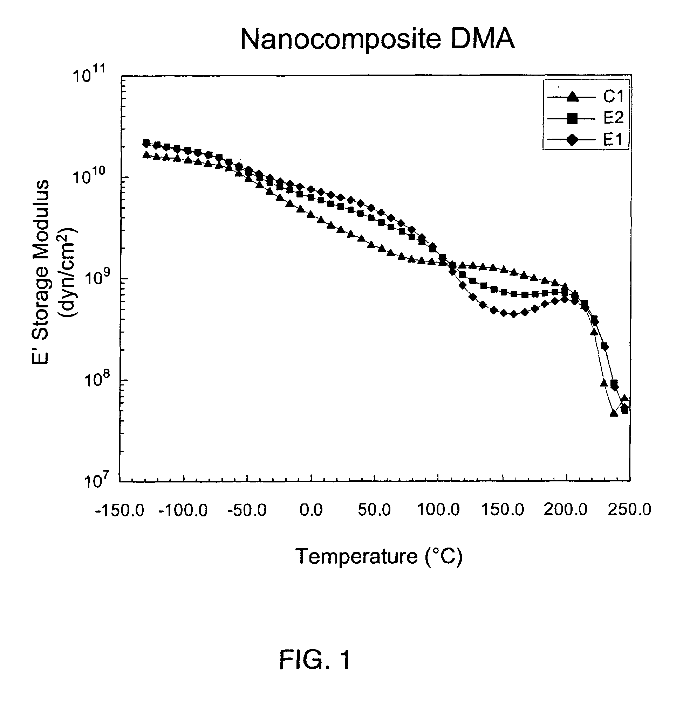

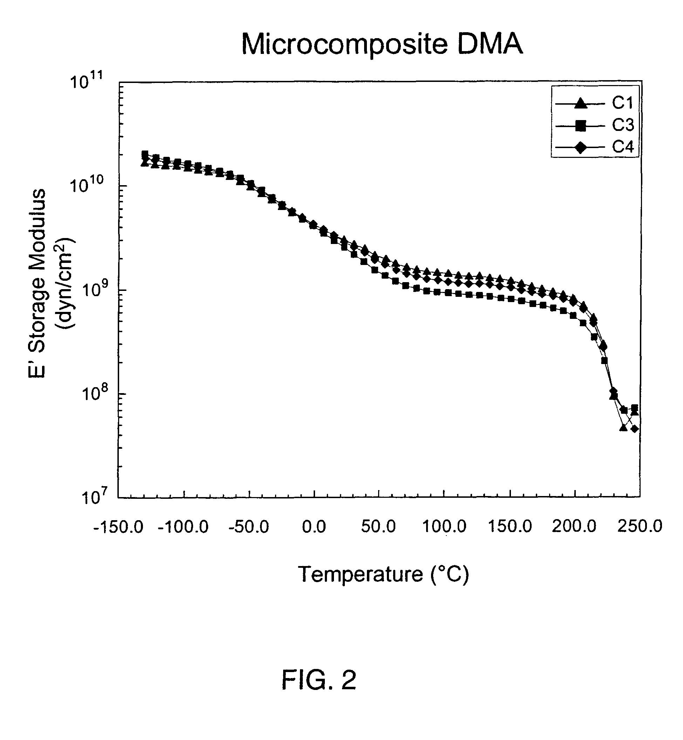

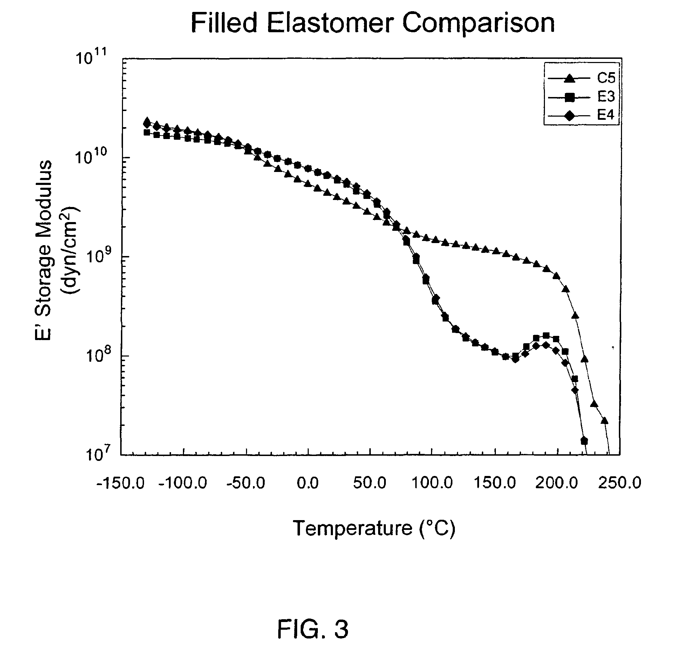

Dynamic Mechanical Analysis (DMA) data were collected for the composite samples in tension using a Rheometric Scientific (now TA Instruments) RSA II rheometer. Test sample dimensions were 22 mm in length, 6.2 mm in width, and 1.6 mm in thickness. Data were collected in 8°C increments between -130° and 250°C; liquid nitrogen was used for maintaining sub ambient temperatures. The applied oscillation frequency was 6.28 rad/sec (1 Hz). A 100-gram tensile force was initially applied to the samples; the static force was controlled at 110% of the dynamic force throughout the rest of the experiment. The strain was maintained in the linear viscoelastic region of the samples. The resulting plots are shown in FIGS. 1-3, and the numerical data are show in Table 3.

Plaques made with prepolymer Examples E1 and E2 showed clear performance advantages over the control prepolymer, Comparative Example C1, especially in hardness, Young's modulus, and dynamic storage modulus, even at low loading levels. The data in FIGS. 1-3 is in the 0-50°C temperature range which encompasses most common use conditions. The E' (storage modulus) numbers, which relate to elastic stiffness, are seen to be greatly enhanced in the compositions that include modified boehmite. Untreated particles added to the control prepolymer, Comparative Example C3, did not perform as well as the control. As shown below in Table 3, for the plaque prepared with comparative example C4 prepolymer, directly adding particle N-1 to the control prepolymer resulted in poor particle dispersion and poor reinforcement relative to Examples E1 and E2. The same trends hold for the conventional prepolymers shown in Examples E3 and E4 versus the control, Comparative Example C5. A significant reinforcement effect was observed even at 3% particle loading.

**TABLE 3**

| | | Hardness | Tensile | | | |
|---|---|---|---|---|---|---|
| Prepolymer | Dispersion | Shore D | Young's Modulus | Tensile Strength | Elongation | 100% Modulus |
| | | | (psi) | (psi) | (%) | (psi) |
| E1 | Good | 77 | 95200 | 7210 | 167 | 5100 |
| E2 | Good | 73 | 73400 | 7030 | 178 | 4723 |
| C1 | NA | 68 | 42100 | 8880 | 236 | 4238 |
| C3 | Poor | 64 | 26700 | 4750 | 200 | 2859 |
| C4 | Poor | 66 | 52100 | 5190 | 188 | 3335 |
| E3 | Good | 72 | 95700 | 6370 | 207 | 3430 |
| E4 | Good | 73 | 79100 | 6330 | 208 | 3470 |
| C5 | NA | 67 | 42600 | 8870 | 274 | 3725 |

| | Tear | | | DMA Storage Modulus | |
|---|---|---|---|---|---|
| Prepolymer | Die C | Split | Trouser | 25°C | 50°C |
| | (pli) | (pli) | (pli) | (MPa) | (MPa) |
| E1 | 1289 | 83 | 195 | 609 | 466 |
| E2 | 793 | 97 | 151 | 495 | 375 |
| C1 | 914 | 103 | 132 | 291 | 206 |
| C3 | 760 | 131 | 170 | 239 | 146 |
| C4 | 643 | 122 | 165 | 278 | 185 |
| E3 | ND | ND | 111 | 593 | 400 |
| E4 | ND | ND | 107 | 571 | 373 |
| C5 | ND | ND | 115 | 386 | 269 |

| | | | | | |
|---|---|---|---|---|---|
| ND - No data | | | | | |

### Polyurethane Microcellular Elastomer "Part C" Additive Packages

Functionalized alumina particles according to the invention may also be incorporated into additive packages for use in making polymers. In the case of polyurethane manufacture, such "Part C" packages typically contain catalysts, blowing agents, and/or other additives for enhancing the manufacturing process or the properties of the polyurethane product. The preparations of two such packages (Comparative example C6 and inventive example E5) are described below, followed by preparations of lab-scale polyurethane foams from them.

### Comparative Example C6 (Additive Package without boehmite)

A master batch for a polyurethane Additive Package (Part C) was blended from 8.0 parts by weight ethylene glycol, 0.7 parts water and 0.5 parts DABCO DC 193 surfactant, and was used as the control. The mixture was blended for 30 minutes using a high speed mixer (1000-1200 rpm) and a Cowles blade.

### Example E5 (1% N-3 loading in final elastomer)

A master additive package batch containing N-3 functionalized boehmite particles was prepared from 8.0 parts by weight ethylene glycol, 0.7 parts water, 0.5 parts DABCO DC 193 surfactant and 2.19 parts of the functionalized boehmite. The mixture was blended for 30 minutes using a high speed mixer (1000 - 1200 rpm) and a Cowles blade.

### Lab Preparation of Polyurethane Foam

Foams were prepared from the C6 and E5 additive packages described above, according to the following procedure. A 97.1-g portion of a shoe sole polyester polyol (poly(ethylene glycol/diethylene glycol)adipate polyester polyol, hydroxyl number 56) from Dow Chemical of Midland, MI was weighed into a disposable beaker. A 8.93-g portion of the Comparative Example C6 additive package was added to the polyol and it was mixed for 30 seconds using a high speed disperser. A 102.1-g portion of a shoe sole MDI/polyester prepolymer (17% NCO) was preweighed into syringes. A 1.94-g portion of DABCO EG catalyst (Air Products and Chemicals, Inc., Allentown, PA) was added to the beaker followed immediately with the contents of the syringes to provide a formulation having a calculated isocyanate index of 100. The contents of the beaker were immediately mixed for 5 seconds using a high speed disperser and poured into a 1 cm x 30.5cm x 15.5cm mold. The mold was preheated to 140°F. The parts were demolded after 5 minutes, and had a foam density of 0.35 g/cc. This procedure was repeated, but using 11.25g of the Example E5 Additive Package. The results of physical property testing are shown below in Table 4.

**TABLE 4**

| Additive Pkg | Boehmite | Young's Modulus | Tensile Strength | % Elongation | 100% Modulus | Split Tear | Shore A Hardness | Ross Flex Room temp. 48,000 cycles | |
|---|---|---|---|---|---|---|---|---|---|
| C6 | none | 429 | 691 | 340 | 252 | 12.9 | 34 | pass | 0 notch growth |
| E5 | N-3 | 533 | 549 | 300 | 250 | 12.3 | 37 | pass | 0 notch growth |

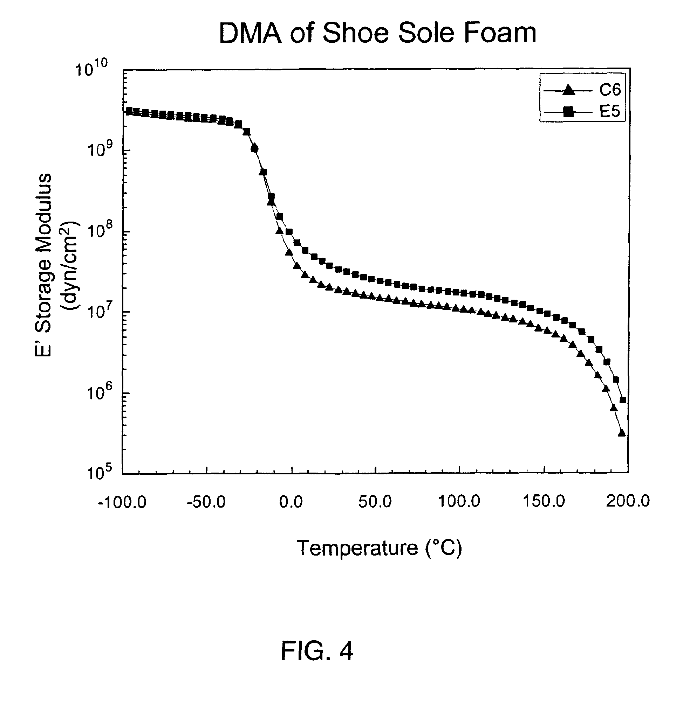

As can be seen from the data in Table 4, the data indicate that hardness and Young's modulus have improved significantly in comparison to the control without significantly impacting the flexibility as seen in the %elongation, split tear and Ross flex. Additionally, the DMA data, shown in Fig. 4, show a significant increase in Storage Modulus above Tg (0-150°C).

### Polyurethane "Part B" Packages (Part C + Polyol)

The preparations of two polyurethane "Part B" packages (Comparative example C7 and inventive example E6) are described below, followed by machine-run preparations of polyurethane foams from them.

### Comparative Example C7 (no boehmite)

A Part C blend was made from 8.0 parts of ethylene glycol, 2.0 parts DABCO EG catalyst (Air Products and Chemicals, Inc.), 0.7 parts water and 0.5 parts DABCO DC 193 surfactant (Air Products and Chemicals, Inc.). The Part C was mixed using a high speed mixer (1000-1200 rpm) and a Cowles blade. The Part B was prepared by adding 11.2 parts of Part C to 100 Parts shoe sole polyester polyol (poly(ethylene glycol/diethylene glycol)adipate polyester polyol, hydroxyl number 59.2) from Dow Chemical and shaking the contents until well mixed.

### Example E6 (1% N-3 loading)

A Part C blend was prepared as immediately above, except that it also contained 2.19 parts of N-3 functionalized boehmite. The Part B was prepared as immediately above, but using 13.39 parts of Part C containing the functionalized boehmite. The loading of N-3 in the Part B was picked so as to provide a 1 wt% loading in the final polyurethane formulation.

### Machine Runs - Polyurethane Foams

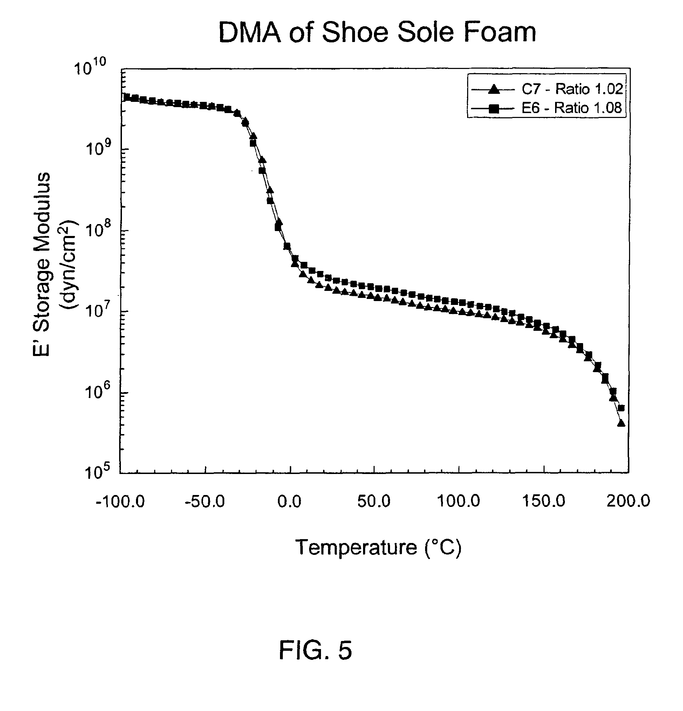

Foam parts were made using an Edge-Sweets machine (Model Number 8BT), available from Edge-Sweets Company of Grand Rapids, MI. The Part B and a shoe sole polyester prepolymer (Dow Chemical 18.82% NCO, MDI/polyester) were added to separate tanks. The two feeds were pumped through the mix head using gear pumps, adjusting the pump speeds to control the mix ratio. The optimum mix ratio was determined by adjusting the Part B pump speed at constant isocyanate pump speed for each formulation by minimizing the pinch and pull time. Ratios were determined using separate shots of the Part B and prepolymer in calibration mode. The foam mixture was poured into a 1 cm x 30.5cm x 15.5cm mold heated to 140°F. Pour time was used to control the amount of formulation added to the mold, and was adjusted to give a final part density of 0.45 g/cc. Plaques were also made at polyol/isocyanate ratios on either side of the optimum. The physical properties of the resulting plaques are shown below in Table 5, and DMA plots are shown in FIG. 5.

**TABLE 5**

| Example | Ratio Polyol / Isocyanate | Tensile Strength (psi) | Elongation at Break (%-in/in) | 100% Modulus (psi) | Young's Modulus (psi) | Split Tear Strength (Lbf) | Hardness (Shore A) | Ross Flex (-15°C) 48000 cycles |
|---|---|---|---|---|---|---|---|---|
| C7 | 0.99 | 299 | 282 | 117 | 172 | 10.90 | 35 | Fail |
| C7 | 1.02 | 419 | 336 | 129 | 207 | 12.10 | 35 | Pass |
| C7 | 1.055 | 465 | 364 | 143 | 225 | 12.51 | 35 | No Data |
| E6 | 1.08 | 521 | 409 | 156 | 247 | 14.20 | 38 | Pass |
| E6 | 1.1 | 536 | 413 | 161 | 238 | 14.50 | 39 | Pass |
| E6 | 1.09 | 457 | 389 | 157 | 269 | 13.87 | 40 | Pass |

As can be seen, the data in Table 5 indicate that hardness, Young's modulus and Tensile strength and tear strength of foams incorporating the functionalized particles of this invention are all improved significantly in comparison to the control. In addition, the Ross Flex values are comparable or slightly better than the control despite an increase in polymer hardness and stiffness. Additionally, the DMA data also show a significant increase in Storage Modulus above Tg (0-150°C).

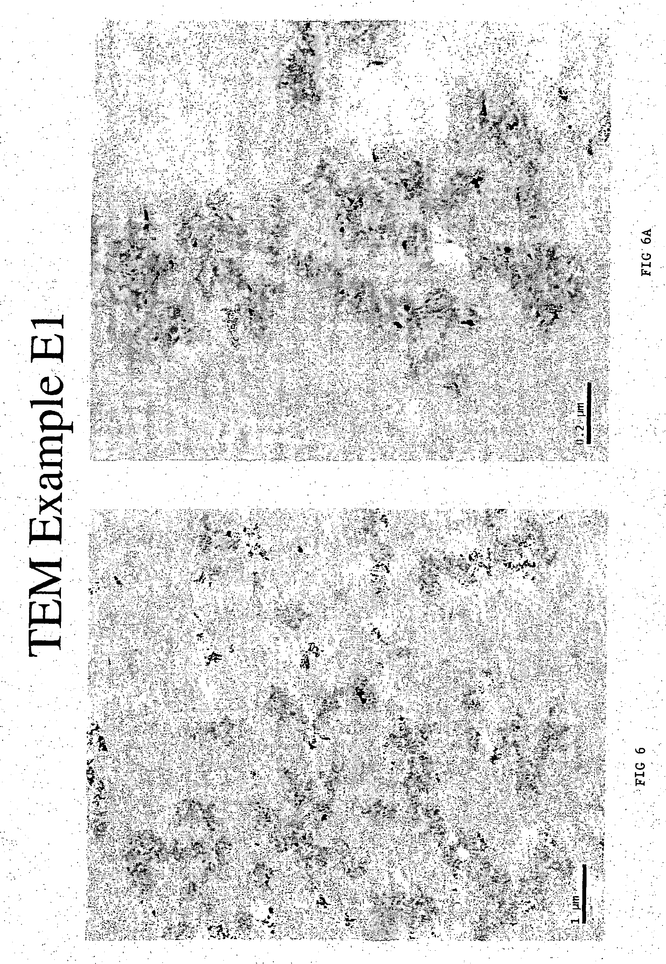

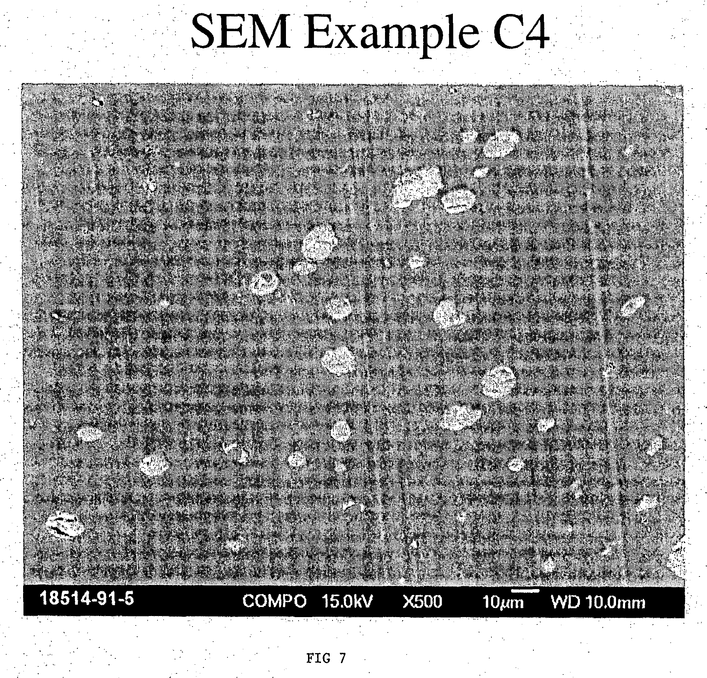

Referring now to Figures 6A/B and 7, these Figures illustrate that the instant invention can disperse particles within a polyurethane elastomer matrix. Figures 6A/B are TEM photographs of the product formed in accordance with Example E1 that were taken at two different magnifications noted by the scale-bars of 1 micron and 0.2 microns.. Figures 6A/B illustrate that the instant invention can achieve fine and well dispersed particles. In contrast, Figure 7 is an SEM of the product formed in accordance with Example C4 taken at 15.0 kv (500x) with a 10 micron scale bar that illustrates the agglomerated particles typically obtained when the proper dispersion conditions or proper surface modified particles are not used.

Although the invention is illustrated and described herein with reference to specific embodiments, it is not intended that the subjoined claims be limited to the details shown. Rather, it is expected that various modifications may be made in these details by those skilled in the art, which modifications may still be within the spirit and scope of the claimed subject matter and it is intended that these claims be construed accordingly.

## Claims

1. A composition comprising alumina particles wherein the particles are surface functionalized with at least one acid of the formula A-R-Q; wherein
A comprises at least one acid group selected from the group consisting of SO₃H, PO₃H₂, and PO₂H₂;
R comprises at least one organic connecting group selected from the group consisting of substituted and unsubstituted acyclic, alicyclic, cyclic, and heterocyclic moieties; and
Q comprises at least one reactive moiety selected from the group consisting of OH, NH₂, vinyl, acryloxy, methacryloxy, NCO, CO₂H, SH, and epoxy.

2. The composition of claim 1, wherein the alumina particles comprise boehmite, pseudoboehmite, or a mixture of these.

3. The composition of claim 1, wherein the surface functionalized particles have a volume average diameter less than about 100nm.

4. The composition of claim 1, wherein R comprises at least one C2-C25 moiety selected from the group consisting of substituted and unsubstituted alkyl, aryl, aralkyl, alkaryl, and alkenyl.

5. The composition of claim 1, wherein the at least one acid of formula A-R-Q comprises isethionic acid.

6. The composition of claim 1, wherein the at least one acid of formula A-R-Q comprises taurine.

7. The composition of claim 1, further comprising at least one ingredients selected from the group consisting of polymeric polyols, di- or tri-isocyanates, reaction products of polymeric polyols with di- or tri-isocyanates, lower glycols, and non-glycol polyurethane curing agents.

8. A composite material comprising an elastomer and alumina particles wherein the particles are surface functionalized with at least one acid of the formula A-R-Q; wherein
A comprises at least one acid group selected from the group consisting of SO₃H, PO₃H₂, and PO₂H₂;
R comprises at least one organic connecting group selected from the group consisting of substituted and unsubstituted acyclic, alicyclic, cyclic, and heterocyclic moieties; and
Q comprises at least one reactive moiety selected from the group consisting of OH, NH₂, vinyl, acryloxy, methacryloxy, NCO, CO₂H, SH, and epoxy.

9. The composite material of claim 8, wherein the elastomer comprises a cured solid polyurethane.

10. The composition of claim 8, wherein the cured solid polyurethane comprises a microcellular elastomer.

11. The composite material of claim 8, wherein the elastomer comprises a diene-based elastomer.
